# EUROPEAN PATENT SPECIFICATION

(11) **EP 2 262 602 B1**
(45) Date of publication and mention of the grant of the patent: **06.06.2012**
(21) Application number: 09708590.6
(22) Date of filing: 26.01.2009
(51) Int. Cl.: B23D 45/12, F25B 9/04

(54) **PIPE MACHINING DEVICE**
ROHRBEARBEITUNGSVORRICHTUNG
DISPOSITIF D'USINAGE DE CONDUITE

(30) Priority: 07.02.2008 US 26798
(43) Date of publication of application: 22.12.2010
(73) Proprietor: Illinois Tool Works Inc., Glenview, IL 60026 (US)
(72) Inventor: CAGLAR, Hasan, Glenview Illinois 60026 (US); SULLIVAN, William, Glenview Illinois 60026 (US)
(74) Representative: Meissner, Bolte & Partner
(86) International application number: PCT/US2009/031942
(87) International publication number: WO 2009/099782

(56) References cited:
- WO-A-02/16876
- AT-U1- 9 196
- DE-A1- 3 128 893
- DE-A1- 10 352 890

## Description

The invention consists of a pipe machining device in the form of a pipe cutting device, pipe gripping device, or pipe rectangular end facing device as described in Claim 1. The preamble of claim 1 is based on DE 10352890.

Examples of this type of pipe cutting device are described in the following documents: CH 372 202, DE 101 34 269 B4, EP 1 138 125 B1, US 2005/0097752 A1. Examples of a device for machining pipe ends are described in DE 101 20 185 B4, EP 0 855 944 B1, US 6 637 304 B2, and US 6 968 761 B2. Pipe end machining can involve beveling and/or rectangular end facing. Rectangular end facing means that the end surface of a pipe is machined in such a way that it is precisely perpendicular to the pipe's lengthwise axis.

DE 30 02 887 A1 and DE 30 17 688 A1 include examples of vortex tubes that generate a vortex current and separate it into a warm air current and a cold air current, such that the cold air current moves within the warm air current in a direction axially opposed to the warm air current. The principle was discovered in 1930 by French physicist Georges Ranque. The cold air current can be used, when machining workpieces, to cool them and the machine tools used on them while they are milled, drilled, ground, and rotated. To date there are no reports of using vortex tubes to generate cold air for cooling workpieces or machine tools on pipe machining devices where the tool is positioned rotatably in a machining device that itself can be rotated around the pipe that is being machined.

AT 009 196 U1 discloses a cutting tool for a chip removing process including a cold air supply channel within the apparatus conducting cold air from within the tool to the to the cutting element 22. Within the cutting tool, a vortex tube is provided cooling compressed gas supplied to it.

The invention should make it possible to achieve the goal of longer tool use times, with a tool that is positioned so that it can rotate and can also simultaneously be moved at least 360° around the pipe to be machined.

This solution is achieved using the version of the invention described in Claim 1.

Additional versions of the invention are included in the subsequent claims.

During the invention process it was determined that machining, and especially cutting pipes, normally does not cause temperatures high enough to damage the tool, but nonetheless the use time, or lifespan, of the tool can be extended if the tool is cooled during use.

The use of a liquid coolant to cool tools can have the disadvantage that the tool and the workpiece, and often the entire work area, must be cleaned again after cooling, in order to remove the liquid coolant along with any residue of the pipe material and/or abrasion particles from the tool that may be contained in it. In addition, the liquid coolant must be filtered before it can be reused or discarded.

During the invention process it was determined that simply cooling with refrigerated or unrefrigerated cold air can significantly extend the lifespan, or use time, of a machine tool. Pressurized air leaves no dirt behind. Cold air, both refrigerated and not, is already used in areas other than pipe machining equipment. For the aforementioned types of pipe machining devices, the use of a coolant in either liquid or air form had not been suggested to date, which may be due to the lower temperatures involved in pipe machining, but also to the fact that, in the aforementioned types of pipe machining devices, not only can the tool be motor-driven-if it is a circular saw blade, an end cutting disc, or something similar-but the tool shaft itself is located in a machining device that can be moved at least 360° around the pipe, so delivering the coolant is difficult.

The invention provides a simple process and means of cooling the tool and/or the pipe being machined, without requiring rotating elements, regardless of whether or not the machining device in which the rotating tool is located can itself be rotated around the pipe.

With one previously mentioned advantageous execution form of the invention, a cold air blower device with a vortex tube is located on the rotatable machining device in which the tool is placed. The cold air outlet of the vortex tube, or the outlet of a cold air outlet tube extending from the cold air outlet, is directed toward the tool and/or toward the area of the pipe to be machined. In this version, the cold air blower device also includes a device for cooling the pressurized air used as the cold air supply.

The invention is described below, with reference to the attached drawings and using the previously described execution forms as examples. The drawings show:

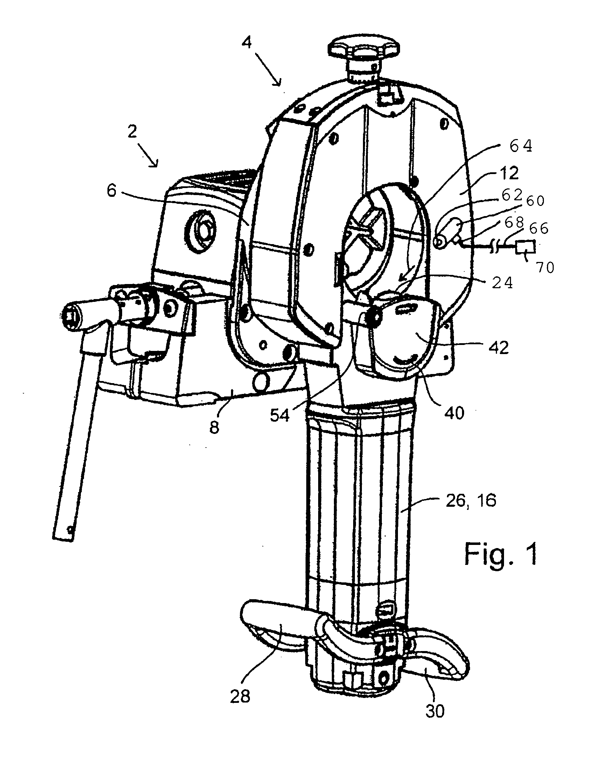

- Fig. 1: a perspective view of a pipe machining device according to the invention, seen diagonally from the front,
- Fig. 2: a front view of the pipe machining device from Fig. 1,
- Fig. 3: a vertical axial cross-section along the plane III-III from Fig. 2,
- Fig. 4: a cam-type drive for radial movement of a sliding element to which a cutting tool is attached,
- Fig. 5: the principle of a vortex tube, which is used to cool pressurized air according to the vortex current principle,
- Fig. 6: a schematic of another way to execute the invention, and
- Fig. 7: a schematic of yet another way to execute the invention.

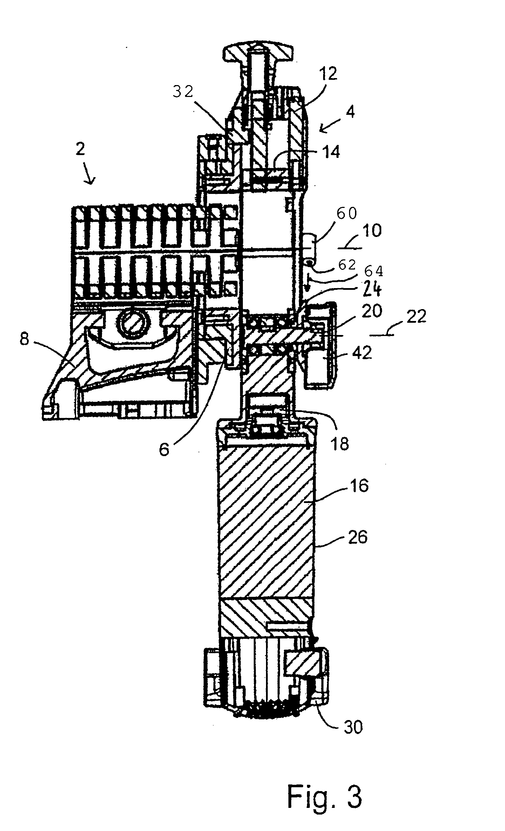

The pipe cutting device shown in the drawings includes a gripping device 2, in the form of a vise, for example, for gripping the pipe to be cut, and a machining device 4 for machining a pipe held in the gripping device 2. The machining device 4 includes a guide ring 6, which is connected to the main body 8 of the gripping device 2 in such a way that it cannot move and defines a rotation axis 10 (Fig. 3), around which a rotating body 12 of the machining device 4 attached to the guide ring 6 can be rotated at least 360°. The rotation axis 10 of the rotating body 12 is aligned with the center axis of the pipe to be cut, defined by the gripping device 2.

The rotating body 12 includes a sliding element 14, which slides easily in the rotating body 12 radially to the rotation axis 10 of the rotating body 12. On the sliding element 14 is a tool shaft 20, which is positioned so that it can rotate and which can be driven by a motor 16 through a gear 18. A tool 24 can be attached to the shaft 20 in such a manner that it does not rotate with respect to the shaft, but rotates with it. The rotation axis 22 of the tool shaft 20 is parallel to the rotation axis 10 of the rotating body 12.

The tool 24 is preferably disc-shaped, such as a circular saw blade or an end cutting disc for cutting a pipe. The tool 24 could also be another type of grinding wheel or a different rotating tool for beveling or rectangular end facing of a pipe's end surface.

The drawings show the machining device 4 in a zero rotation direction position.

Here the tool 24 moves radially downward away from the pipe to be cut, and a protrusion 26 connected to the sliding element 14, which contains the motor 16 and a gear 18 or consists at least partially of a motor housing, extends outward and downward from the sliding element 14 like a lever. The protrusion 26 can be provided with one or two grips 28 and 30 on its outer end that is farthest away from the sliding element 14. The protrusion 26 extends crosswise, preferably radial, to the rotation axis 10 of the rotating body 12.

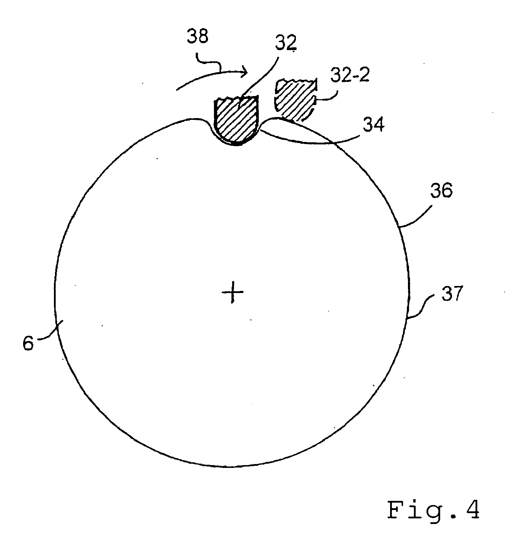

At the zero rotation direction position shown in the drawings, the sliding element 14 is held by a guide bolt 32 fastened to it in a cam groove 34 of a guide track 36 extending 360° around it. This is shown in the schematic in Fig. 4. The guide bolt 32 is fastened to the sliding element 14. The guide track 36 is located on the guide ring 6 or on a cam disc fastened with a non-rotating connection to the guide ring 6. Segment 37 of the guide track 36 on both sides of the cam groove 34 can be circular, with the circle's center point in the rotation axis 10 of the rotating body 12.

If the rotating body 12 is moved outward from the zero rotation direction position as it rotates around its rotation axis 10, the guide bolt 32 is raised up out from the cam disc 34 on the guide track segment 37, as shown in Fig. 4 at the shaded position 32-2 of the guide bolt 32. The guide track segment 37 has a larger radius than the shaft groove in the cam disc 34. This lifting of the guide bolt 32 out from the cam disc 34 on the radially higher guide track segment 37 causes the sliding element 14 to be lifted up by a corresponding distance, which also lifts the tool 24 into a pipe to be machined, e.g., cut off. With continued rotation of the rotating body 12, the sliding element 14, and the cutting tool around the rotation axis 10 of the rotating body 12-in rotation direction 38, for example-the cutting tool 24 remains in the wall of the pipe being cut, so that the pipe is machined, e.g., cut. At the end of 360° of rotation by the rotating body 12, the guide bolt 32 goes back into the cam disc 34, which makes the tool 24 with the sliding element 14 fall radially away from the pipe. Now the machining device 4 with the rotating body 12 and the tool 24 can either be rotated farther in the same direction or be rotated back in the opposite rotation direction.

These possibilities, described with reference to Fig. 4, for forward radial movement of the tool 24 radially to the pipe to be machined, e.g., cut off, and then away from said pipe are only one of many possible execution forms. Other forms may also be used, depending on the current state of the technology.

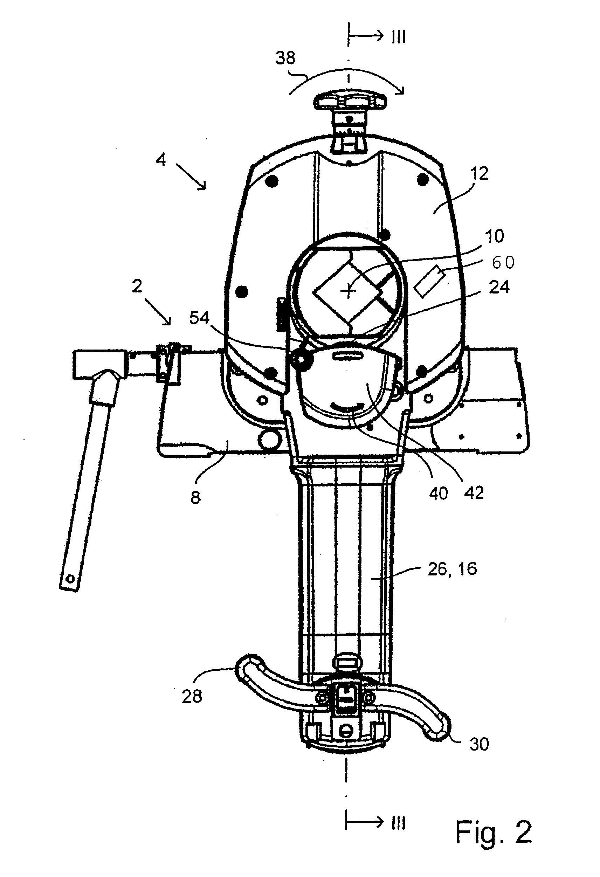

The rotation direction 38 of the rotating body 12 together with the sliding element 14 and the tool 24 is preferably opposite to the rotation direction 40 of the tool 24, as shown, for example, in Fig. 2 by arrows 38 and 40. As an example, in the front view of the cutting device 4, the rotation direction 38 of the rotating body 12 is shown as clockwise and the rotation direction 40 of the tool 24 as counterclockwise.

A protective cap 42 can be placed in front of the tool 24, in order to prevent a person from accidentally stopping the tool 24 when the pipe machining device is switched on and to catch chips that are shaved off and thrown away from the pipe by the tool 24.

The protective cap 42 is swivel-mounted on the sliding element 14 around a swivel axis 54 that is parallel to the rotation axis 22 of the tool shaft 20, against the spring tension of a spring (not shown), in the direction away from the rotation axis 10 of the rotating body 12.

If the sliding element 14 together with the tool 24, as they have previously been described, for example, are moved radially, then the tool 24 goes toward the pipe and makes contact with the pipe wall, so that the pipe pushes the protective cap 42 radially away, causing the protective cap 42 to swivel around its swivel axis 54.

According to the invention, the rotatable machining device 4 is equipped with a cold air blower device 60, whose cold air outlet 62 is directed toward the area where the tool 24 is working and/or toward the machining area of the pipe to be machined by the tool, in order to blow pressurized cold air 64 on it.

The cold air blower device 60 can be integrated into the rotatable machining device 4 or attached to it.

For feeding pressurized air into the pressurized air blower device 60, a flexible pressurized air hose 66 is provided, with one end connected to a pressurized air inlet 68 of the pressurized air blower device 60, and the other end connected or connectable to a pressurized air source 70. The pressurized air source 70 can be a pressure regulator, pressure reducer, pressurized air supply, or air compressor, for example.

The cold air for the invention can be unrefrigerated or, preferably, refrigerated pressurized air.

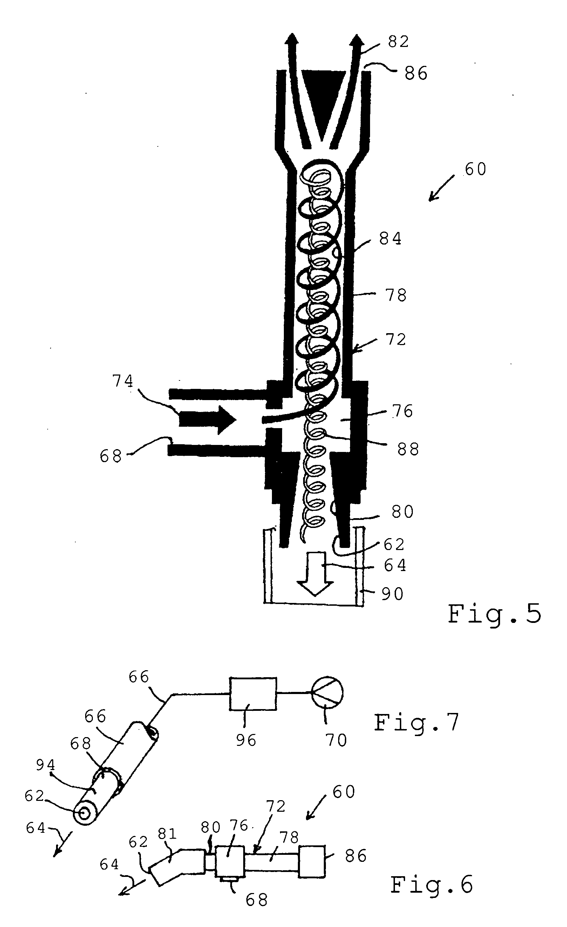

According to a previously described execution form of the invention, the cold air blower device 60 has a vortex tube 72, which uses the vortex current principle to divide the pressurized air current 74 from the pressurized air inlet 68 into a warm air current (or hot air current) and a cold air current. Fig. 5 in the drawings shows the principle of such a vortex tube 72.

As shown in Fig. 5, the vortex tube 72 contains a vortex generation chamber 76, into which the pressurized air inlet 68 empties. A warm air pipe 78 extends away from the vortex generation chamber 76 in one axial vortex direction, and a cold air outlet channel 80 in the opposite axial vortex direction. The cold air outlet channel 80, as shown in Fig. 5, or an extension 81 from it as shown in Fig. 6, leads to the aforementioned cold air outlet 62. The extension 81 can be a pipe or hose. The pressurized air 74, which flows through the pressurized air inlet 68 in the vortex generation chamber 76, is placed into rotation in the chamber and rotates in an axial direction through the warm air pipe 78, such that it is pressed against the inner surface of the warm air pipe 78 and heated. At the end of the warm air pipe 78 away from the vortex generation chamber 76, a smaller portion 82 of the warm air vortex current 84 flows out through a warm air outlet 86 from the warm air pipe 78. The remaining portion 88 of the warm air vortex current 84 is channeled back forcibly, rotating at a low speed, through the middle of the warm air vortex current 84 in the opposite axial direction, so that it gives heat to the faster rotating warm air vortex current 84. This makes the back-rotating portion 88 (cold air vortex current) colder than the original pressurized air 74, until it then flows out as cold air 64 through the cold air outlet channel 80 and then from the cold air outlet 62.

The vortex tube 72 is shown with a noise muffler 90.

According to another execution form of the invention, shown schematically in Fig. 7, the cold air blower device can consist of a blower pipe 94 attached to the rotatable machining device 4, one end of which is directed toward the tool 24 and/or toward the pipe to be machined and acts as the cold air outlet 62, and the other end of which is connected via a pressurized air hose 66 to a pressurized air source 70. Between the pressurized air source 70 and the pressurized air hose 66, a cooling device 96 can be attached for cooling the pressurized air.

At the location of a blower pipe 94, a nozzle fitting can be provided in the rotatable machining device 4, whose nozzle outlet acts as the cold air outlet 62.

## Claims

1. Pipe machining device in the form of a pipe cutting device, pipe gripping device, or pipe rectangular end facing device, including a non-rotating fixed or positional gripping device (2) for gripping a pipe to be machined; a rotatable machining device (4), that is mechanically connected to the gripping device (2), but is placed so that it can be rotated at least 360° relative to the gripping device (2), around a rotation axis (10) that is aligned with a pipe center axis of the pipe to be machined, defined by the gripping device (2); a rotatable, motor-drivable tool shaft (20) for the tool (24) that machines the pipe, placed in the rotatable machining device (4);
**characterized in that**
the rotatable machining device (4) is equipped with a cold air blower device (60; 94) that has a pressurized air inlet (68) and a pressurized air outlet such that the pressurized air outlet is used as a cold air outlet (62) and directed onto the part of the tool (24) that contacts the pipe during machining, blowing the tool (24) with cold pressurized air,
the cold air outlet (62) also being directed toward the machining area of the pipe, where the tool (24) is machining the pipe, so that this machining area is also blown with cold air,
the cold air blower device (60; 94) is attached to the rotatable machining device (4), and
a flexible pressurized air hose (66) is provided, one end of which is connected to the pressurized air inlet (68) of the cold air blower device (60; 94), and whose other end is connected to or can be connected to a pressurized air source (70) that is separate from the rotatable machining device (4).

2. Pipe machining device as in claim 1,
**characterized in that**
the cold air blower device (60) has a vortex tube (72), fastened to the rotatable machining device (4), that works according to the vortex tube principle to separate a pressurized air current into a warm air current and a cold air current, wherein the vortex tube (72) has a vortex generation chamber (76), a warm air outlet (86), and a cold air outlet (80) axially opposed to the warm air outlet (86), both of which exit from the vortex generation chamber (76), such that the pressurized air inlet (68) empties into the vortex generation chamber (76), and the cold air outlet (80), or the outlet of a cold air outlet pipe (81) extending from the cold air outlet (80) and functioning as a cold air outlet (62), is directed onto the part of the tool (24) that contacts the pipe during machining, so that it blows on the tool (24).

3. Pipe machining device as in Claim 1,
**characterized in that**
a cooling device (96) for cooling the pressurized air is provided, and is connected to the cold air blower device (94) at the pressurized air intake (68).

4. Pipe machining device as in one of the preceding claims,
the rotatable machining device (4) has a handgrip (26, 28, 30), used to rotate the device manually at least 360° around the aforementioned rotation axis (10), as described above.

## Patentansprüche

1. Rohrbearbeitungsvorrichtung in der Form einer Rohrschneidevorrichtung, einer Rohrgreifvorrichtung oder einer Vorrichtung zur rechtwinkligen Bearbeitung von Rohrenden, einschließlich einer nichtdrehbaren feststehenden oder positionierbaren Greifvorrichtung (2) zum Greifen eines zu bearbeitenden Rohrs; einer drehbaren Bearbeitungsvorrichtung (4), die mechanisch mit der Greifvorrichtung (2) verbunden, aber so platziert ist, dass sie im Verhältnis zur Greifvorrichtung (2) mindestens 360° um eine Drehachse (10) gedreht werden kann, die zu einer Rohrmittelachse des zu bearbeitenden Rohrs ausgerichtet ist, definiert durch die Greifvorrichtung (2); einer drehbaren, durch einen Motor antreibbaren Werkzeugwelle (20) für das zur Rohrbearbeitung in der drehbaren Bearbeitungsvorrichtung (4) platzierte Werkzeug (24);
**dadurch gekennzeichnet, dass**
die drehbare Bearbeitungsvorrichtung (4) mit einer Kaltluftgebläsevorrichtung (60; 94) ausgestattet ist, die einen Drucklufteinlass (68) und einen Druckluftauslass hat, wobei der Druckluftauslass als ein Kaltluftauslass (62) dient, der auf denjenigen Teil des Werkzeugs (24) gerichtet ist, der während der Bearbeitung mit dem Rohr in Berührung kommt, um so kalte Druckluft auf das Werkzeug (24) zu blasen,
wobei der Kaltluftauslass (62) auch hin zur Bearbeitungsfläche des Rohrs gerichtet ist, wo das Rohr vom
Werkzeug (24) bearbeitet wird, so dass Kaltluft ebenfalls auf diese Bearbeitungsfläche geblasen wird,
wobei die Kaltluftgebläsevorrichtung (60; 94) an der drehbaren Bearbeitungsvorrichtung (4) befestigt ist,
und wobei ein flexibler Druckluftschlauch (66) vorgesehen ist, der mit einem Ende mit dem Drucklufteinlass (68) der Kaltluftgebläsevorrichtung (60; 94) verbunden ist und mit dem anderen Ende mit einer Druckluftquelle (70), die separat von der drehbaren Bearbeitungsvorrichtung (4) vorgesehen ist, verbunden ist oder verbunden werden kann.

2. Rohrbearbeitungsvorrichtung nach Anspruch 1,
**dadurch gekennzeichnet, dass**
die Kaltluftgebläsevorrichtung (60) ein an der drehbaren Bearbeitungsvorrichtung (4) befestigtes Wirbelrohr (72) hat, das gemäß dem Wirbelrohrprinzip einen Druckluftstrom in einen Warmluftstrom und einen Kaltluftstrom trennt, wobei das Wirbelrohr (72) eine Wirbelerzeugungskammer (76), einen Warmluftauslass (86) und einen dem Warmluftauslass (86) axial gegenüberliegenden Kaltluftauslass (80) hat, die beide aus der Wirbelerzeugungskammer (76) austreten, wobei sich der Drucklufteinlass (68) in die Wirbelerzeugungskammer (76) entleert, und wobei der Kaltluftauslass (80) oder der Auslass eines Kaltluftauslassrohrs (81), das sich vom Kaltluftauslass (80) aus erstreckt und als ein Kaltluftauslass (62) dient, auf denjenigen Teil des Werkzeugs (24) gerichtet ist, der während der Bearbeitung mit dem Rohr in Berührung kommt, so dass er auf das Werkzeug (24) bläst.

3. Rohrbearbeitungsvorrichtung nach Anspruch 1,
**dadurch gekennzeichnet, dass**
eine Kühlvorrichtung (96) zum Kühlen der Druckluft vorgesehen ist, die am Drucklufteinlass (68) mit der Kaltluftgebläsevorrichtung (94) verbunden ist.

4. Rohrbearbeitungsvorrichtung nach einem der vorstehend aufgeführten Ansprüche, wobei die drehbare Bearbeitungsvorrichtung (4) einen Griff (26, 28, 30) hat, der benutzt wird, um die Vorrichtung, wie vorstehend beschrieben, manuell mindestens 360° um die vorerwähnte Drehachse (10) zu drehen.

## Revendications

1. Dispositif d'usinage de conduite sous la forme d'un dispositif de coupe de conduite, d'un dispositif de préhension de conduite ou d'un dispositif à dresser rectangulaire pour conduite, incluant un dispositif de préhension non rotatif fixe ou positionnel (2) pour saisir une conduite à usiner ; un dispositif d'usinage rotatif (4), qui est connecté mécaniquement au dispositif de préhension (2), mais qui est placé de telle sorte qu'il puisse tourner sur au moins 360° par rapport au dispositif de préhension (2), autour d'un axe de rotation (10) qui est aligné avec un axe central de conduite de la conduite à usiner, défini par le dispositif de préhension (2) ; un arbre d'outil rotatif (20) pouvant être entraîné par un moteur pour l'outil (24) qui usine la conduite, placée dans le dispositif d'usinage rotatif (4) ;
**caractérisé en ce que**
le dispositif d'usinage rotatif (4) est équipé d'un dispositif de soufflage d'air froid (60 ; 94) qui a une entrée d'air sous pression (68) et une sortie d'air sous pression de telle sorte que la sortie d'air sous pression soit utilisée comme sortie d'air froid (62) et soit orientée sur la partie de l'outil (24) qui vient en contact avec la conduite au cours de l'usinage, soufflant de l'air froid sous pression sur l'outil (24),
la sortie d'air froid (62) étant aussi orientée vers la zone d'usinage de la conduite, où l'outil (24) usine la conduite, de sorte que cette zone d'usinage soit aussi soumise à un jet d'air froid, le dispositif de soufflage d'air froid (60 ; 94) est attaché au dispositif d'usinage rotatif (4),
et
il est prévu un tuyau d'air sous pression flexible (66), dont une extrémité est connectée à l'entrée d'air sous pression (68) du dispositif de soufflage d'air froid (60 ; 94) et dont l'autre extrémité est connectée ou peut être connectée à une source d'air sous pression (70) qui est séparée du dispositif d'usinage rotatif (4).

2. Dispositif d'usinage de conduite selon la revendication 1,
**caractérisé en ce que**
le dispositif de soufflage d'air froid (60) a un tube vortex (72), attaché au dispositif d'usinage rotatif (4), qui fonctionne en fonction du principe des tubes vortex pour séparer un courant d'air sous pression en un courant d'air chaud et un courant d'air froid, le tube vortex (72) ayant une chambre de génération de vortex (76), une sortie d'air chaud (86), et une sortie d'air froid (80) axialement opposée à la sortie d'air chaud (86), toutes deux sortant de la chambre de génération de vortex (76), de telle sorte que l'entrée d'air sous pression (68) se vide dans la chambre de génération de vortex (76) et que la sortie d'air froid (80), ou la sortie d'une conduite de sortie d'air froid (81) s'étendant depuis la sortie d'air froid (80) et servant de sortie d'air froid (62), soit dirigée vers la partie de l'outil (24) qui vient en contact avec
la conduite au cours de l'usinage, de sorte qu'elle souffle sur l'outil (24).

3. Dispositif d'usinage de conduite selon la revendication 1,
**caractérisé en ce**
**qu'**il est prévu un dispositif de refroidissement (96) pour refroidir l'air sous pression, lequel dispositif de refroidissement est connecté au dispositif de soufflage d'air froid (94) au niveau de l'admission d'air sous pression (68).

4. Dispositif d'usinage de conduite selon l'une quelconque des revendications précédentes,
dans lequel le dispositif d'usinage rotatif (4) a une poignée (26, 28, 30) utilisée pour faire tourner manuellement le dispositif sur au moins 360° autour de l'axe de rotation susmentionné (10), comme décrit ci-dessus.
